# FASCICULE DE BREVET EUROPEEN

(11) **EP 0 499 499 B1**
(45) Date de publication et mention de la délivrance du brevet: **12.04.1995**
(21) Numéro de dépôt: 92400154.8
(22) Date de dépôt: 21.01.1992
(51) Int. Cl.: F16G 1/28, F16G 1/12

(54) **Courroie notamment pour engrènement dans un mécanisme de distribution d'un moteur à combustion interne et procédé de fabrication d'une telle courroie**
Riemen, insbesondere zum Eingreifen in eine Steuervorrichtung einer Brennkraftmaschine und Herstellungsverfahren eines solchen Riemens
Belt, especially for positive driving in the timing system of an internal combustion engine and method of making such a belt

(30) Priorité: 21.01.1991 FR 9100635
(43) Date de publication de la demande: 19.08.1992
(73) Titulaire: IMPHY S.A., F-92072 Puteaux (FR)
(72) Inventeur: Lapierre, Anne-Marie, F-58160 Sauvigny les Bois (FR)
(74) Mandataire: Lanceplaine, Jean-Claude

(56) Documents cités:
- DE-C- 533 398
- FR-A- 1 099 528
- GB-A- 963 386
- SOVIET INVENTIONS ILLUSTRATED, semaine 8419, 20 juin 1984, sections P,Q:General/Mechanical, classe Q64, résumé no. 84-119381/19, Derwent Publications Ltd, Londres, GB; & SU-A-1033 794 (BELORUSSIAN POLY) 07-08-1983
- SOVIET INVENTIONS ILLUSTRATED, semaine 8805, 4 février 1988, sections P,Q:General/Mechanical, classe Q64, résumé no. 88-035145/05, Derwent Publications Ltd, Londres, GB; & SU-A-1318 757 (BELORUSSIAN POLY) 23-06-1987

## Description

La présente invention a pour objet une courroie, notamment pour un engrènement utilisé dans un mécanisme de distribution d'un moteur à combustion interne en particulier pour la transmission d'un mouvement entre la vilebrequin et l'arbre à cames.

La présente invention a également pour objet un procédé de fabrication et une utilisation d'une telle courroie.

Dans un mécanisme de distribution d'un moteur à combustion interne, il est connu d'utiliser des chaînes pour la transmission d'un mouvement, notamment pour leur bonne tenue mécanique et pour leur résistance aux variations de température.

Cependant, lors de leur fonctionnement, le bruit occasionné par l'engrènement sur la denture des poulies devient vite une gêne auditive.

Cet inconvénient a conduit les motoristes à employer des courroies à base d'élastomère.

De telles courroies sont généralement constituées d'une âme de renforcement, par exemple en "KEVLAR", en fibre de verre ou en polyester formant la ligne primitive de la courroie, qui est noyée dans un corps en élastomère.

Sur ce corps sont disposées des dents, par exemple par surmoulage, en élastomère renforcé et durci qui exercent une fonction d'engrènement avec la denture des poulies.

Les courroies en élastomère tel que le polyétherester présente l'inconvénient de ne pas offrir une bonne tenue en température malgré une résistance mécanique acceptable. Cet inconvénient est d'autant plus néfaste que, dans les moteurs, les températures avoisinent les 110°C. En effet, afin d'obtenir de meilleurs coefficients de pénétration des véhicules dans l'air, les moteurs sont de plus en plus capotés, ce qui élève considérablement les températures sous le capot.

Par contre, les courroies en nitrile hydrogéné résistent à la chaleur, mais leur durée de vie ne répond pas encore au cahier des charges des constructeurs et, de plus, leur coût de fabrication est élevé.

Actuellement, les courroies en élastomère résistent aux températures d'utilisation, mais sont peu adaptées aux exigences liées au développement de l'industrie automobile, à savoir une transmission de puissance mécanique de plus en plus grande et une durée de vie importante.

En effet, les charges élevées à transmettre et les perpétuelles sollicitations en flexion et contreflexion de la courroie produisent avec le temps un cisaillement des dents à leur base, donc l'annulation de l'engrènement positif de la distribution et, au delà, l'arrêt du moteur.

Les motoristes ont envisagé d'augmenter la largeur des courroies, de 25,4mm à 30mm, mais ils y ont renoncé car cette modification structurelle se révèle incompatible avec les exigences dimensionnelles dues aux positions généralement transversales des moteurs sur les véhicules.

Pour transmettre des charges élevées qui s'exercent sur la courroie, les motoristes ont mis au point des courroies dont la structure mécanique de l'âme de renforcement est constituée par du cablé en "KEVLAR", en fibre de verre ou en polyester afin d'assurer une bonne tenue mécanique en traction de la courroie.

Cependant, dans une telle conception, la charge ne se transmet pas d 'une manière uniforme entre la dent et l'élément de résistance de la courroie, c'est à dire l'âme, la charge sollicitant par la même de manière excessive des zones de la courroie qui ne sont pas destinées à exercer cette fonction mécanique ceci avant même que l'âme n'ait été employée.

A la suite d'études sur les efforts dynamiques , les motoristes ont conçu des dents de formes particulières remplaçant les formes trapézoïdales connues afin de répartir les contraintes thermomécaniques qui s'exercent dessus. Ces dents ont par exemple une forme demi-cylindrique.

Mais, ces nouvelles caractéristiques techniques des courroies de distribution ne permettent pas d'assurer une tenue mécanique suffisante pour transmettre des charges élevées et, en particulier pour résister aux efforts de cisaillement des dents en position d'engrènement.

De plus, les motoristes demandent aujourd'hui de respecter un cahier des charges mentionnant des durées de vie pour les courroies de distribution de l'ordre de 200 000 Km. A l'heure actuelle, ces mêmes motoristes préconisent un remplacement des courroies qui sont considérées comme usagées au-delà de 100 000 Km.

Par ailleurs, des coussins d'adhérence peuvent être placés de part et d'autre de l'âme de la courroie afin de réaliser une bonne adhérence de ladite âme. De tels coussins qui servent de liaison mécanique sont un facteur de fragilité pour la cohésion de la courroie.

D'autre part, on connaît dans le FR-A-1 009 528 une courroie constituée d'un feuillard munide saillies. Ce feuillard est noyé dans un enrobage d'épaisseur importante et comportant des saillies plus importantes qui constituent des éléments d'engrènement.

Ce type de courroies comporte une masse importante de matière qui subit un échauffement interne intense lorsque ces courroies sont mises en sevice.

La présente invention vise à remédier aux inconvénients précédemment cités en proposant une courroie dont la tenue mécanique est améliorée ce qui lui permet de transmettre une puissance mécanique élevée, d'écarter les risques de rupture mécanique ainsi que d'augmenter sa durée de vie.

La présente invention a pour objet une courroie comprenant une âme formée par un feuillard en alliage métallique à haute limite élastique, muni, sur au moins une de ses faces d'une pluralité d'éléments d'engrènement obtenus par déformation ou par découpe locale du feuillard, caractérisée en ce que, de part et d'autre de chaque élément d'engrènement, il subsiste deux bandes de feuillard non déformées et en ce que ledit feuillard est enrobé d'un film de polymère d'épaisseur uniforme.

Selon d'autres caractéristiques de l'invention :
- les éléments d'engrènement sont des saillies,
- les éléments d'engrènement sont des perforations,
- les saillies sont des crevés, chacun desdits crevés étant formé par au moins un bord tombé disposé transversalement à l'âme,
- le bord tombé présente une courbure,
- les saillies sont des emboutis,
- les emboutis présentent une forme sensiblement parallélépipèdique,
- les emboutis présentent une perforation sensiblement en leur milieu, disposée transversalement à l'âme,
- les emboutis présentent une forme demicylindrique,
- les éléments d'engrènement présentent au moins une zone de discontinuité,
- l'épaisseur du film polymère est comprise entre 0,1 et 0,5mm,
- le polymère est formé d'un vernis,
- l'alliage métallique à haute limite élastique possède la composition suivante :
   - Cobalt entre 7 et 10%
   - Nickel entre 16 et 20%
   - Molybdène entre 3,5 et 6,5%
   - Titane entre 0,2 et 1%
   le reste étant du fer et des impuretés résultant de l'élaboration,
- la composition pondérale de l'alliage métallique est, de préférence, la suivante :
   - Cobalt environ 9%
   - Nickel environ 18%
   - Molybdène environ 5%
   - Titane environ 0,5%
   le reste étant du fer et des impuretés résultant de l'élaboration.

L'invention a également pour objet un procédé de fabrication d'une courroie telle que mentionnée ci-dessus, caractérisé en ce que :
- on découpe, on emboutit ou on perfore un feuillard en alliage métallique à haute limite élastique pour former des éléments d'engrènement de la courroie, en laissant subsister de part et d'autre des éléments d'engrènement par rapport à l'axe longitudinal du feuillard, des bandes de feuillard non déformées,
- on solidarise les deux extrémités du feuillard de façon à former un anneau continu, par exemple par soudage et notamment par soudage au laser,
- et on enrobe le feuillard et les éléments d'engrènement d'un film de polymère d'épaisseur uniforme.

Selon d'autres caractéristiques du procédé selon l'invention :
- le film d'enrobage du feuillard et des éléments d'engrènement est formé par au moins un trempé dans une solution constituée d'un polymère liquide,
- on sèche le film après l'opération de trempé.

La courroie selon l'invention est utilisée dans un mécanisme de distribution d'un moteur par exemple pour mesurer la vitesse de rotation du moteur en plaçant en regard de l'une des faces de la courroie un capteur magnétique comme par exemple un capteur magnétique à réluctance variable.

L'invention va être décrite plus en détails ci-dessous en se référant aux dessins annexés, donnés uniquement à titre d'exemple, et dans lesquels :
- Les Figs. 1 à 4 sont des vues partielles en coupe longitudinale de différents modes de réalisation d'une courroie selon l'invention,
- la Fig. 5 est une vue schématique en perspective d'un premier mode de réalisation d'un feuillard de la courroie selon l'invention,
- la Fig. 6 est une vue schématique en perspective d'un second mode de réalisation d'un feuillard de la courroie selon l'invention.

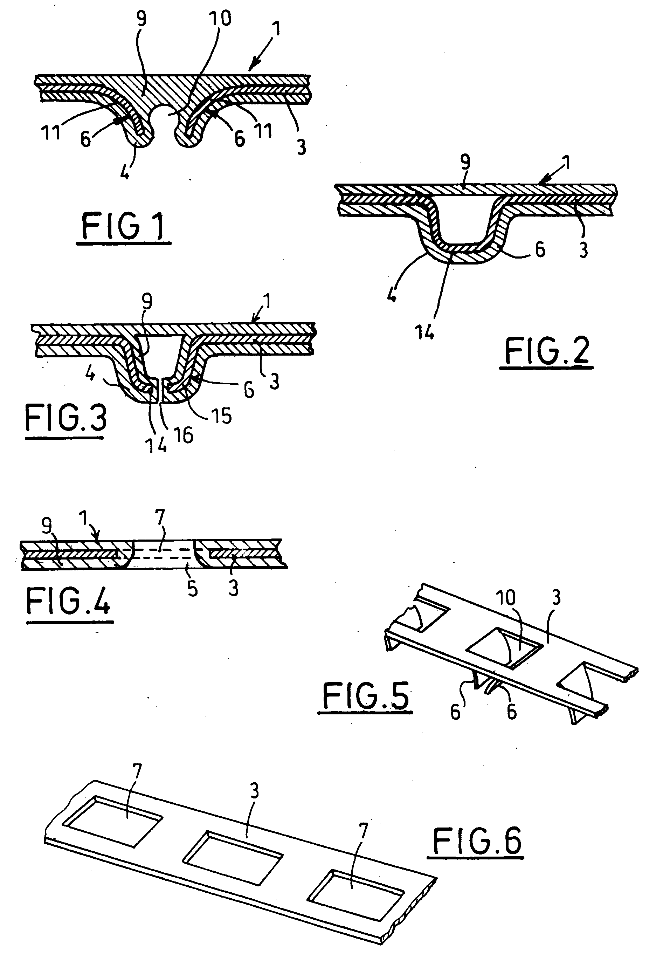

La courroie 1 représentée aux Figs 1 à 4 pour un engrènement utilisé dans un mécanisme de distribution d'un moteur à combustion interne, comprend, d'une part, une âme 3 formée par au moins un feuillard en alliage métallique à haute limite élastique et, d'autre part, des éléments d'engrènement 6 ou 7 disposés transversalement à ladite âme sur au moins une des deux faces de plus grande largeur de celle-ci.

L'alliage possède la composition pondérale suivante :
- cobalt entre 7 et 10%, de préférence 9%
- nickel entre 16 et 20%, de préférence 18%
- molybdène entre 3,5 et 6,5% de préférence 5%
- titane entre 0,2 et 1%, de préférence 0,5%
- le reste étant du fer.

L'alliage possède une conductibilité thermique élevée qui lui permet une bonne transmission de la chaleur, limitant ainsi l'échauffement interne du feuillard 3 lorsqu'il est le siège de contraintes thermomécaniques.

Cet avantage concourt à augmenter la durée de vie de la courroie.

Le feuillard 3 réalisé dans cet alliage peut, selon une épaisseur de 0,2 à 0,5 mm, offrir une tenue en traction supérieure à 2 tonnes.

Grâce à un module d'élasticité de 185 000 Mpa, ce matériau résiste fortement à la fatigue et possède une grande flexibilité mécanique.

Une autre caractéristique intéressante de cet alliage réside dans sa soudabilité ce qui permet de souder les deux extrémités de la courroie pour former un anneau continu.

Ce soudage peut être réalisé, par exemple au moyen d'un laser.

Selon l'invention, le feuillard 3 et les éléments d'engrènement 6 ou 7 sont enrobés d'un film 9 de polymère d'épaisseur uniforme.

Les éléments d'engrènement 6 ou 7 ainsi enrobés forment les moyens d'engrènement de la courroie.

Il convient de noter que la fonction mécanique d'engrènement est assurée par la disposition et la configuration des éléments d'engrènement 6 ou 7, le film d'enrobage 9 exerçant principalement une fonction d'insonorisation, c'est à dire d'amortisseur sonore.

En réalité, on donne au film 9 une épaisseur minimale d'environ 0,1mm afin d'éviter une usure prématurée du fait des sollicitations thermiques et mécaniques auxquelles est soumise la courroie, l'épaisseur du film 9 variant de 0,1 à 0,5mm.

Selon les exigences recherchées, le feuillard 3 a une épaisseur qui varie entre 0,1 et 1mm et sa largeur est par exemple égale à 15 ou 19 ou 25,4 mm.

Dans un premier mode de réalisation de l'invention, les éléments d'engrènement sont des saillies 6 qui peuvent avoir des dimensions variables.

La longueur des saillies 6 est déterminée pour conserver de part et d'autre desdites saillies, transversalement au feuillard 3, une bande de matière en alliage à haute limite élastique qui est calculée de manière à assurer la tenue en traction recherchée pour la courroie.

De préférence, le feuillard 3 a les dimensions suivantes :
- 0,2mm d'épaisseur
- 25,4 mm de largeur
- 1000mm de longueur.

Les saillies 6 ont une largeur de 5mm, cette dimension est prise longitudinalement au feuillard, et une longueur de 15mm.

La courroie 1 transmet par exemple, un mouvement entre un vilebrequin et un arbre à cames portant des poulies qui comportent respectivement 21 et 42 dents. Dans ce cas, la courroie comporte 105 moyens d'engrènement disposés selon un pas de 9,5mm.

L'épaisseur de 0,2mm du feuillard 3 apporte une limitation importante de l'échauffement interne dudit feuillard 3 par rapport à une nappe de cablés par exemple en "KEVLAR", de 0,8mm d'épaisseur pour une puissance transmise égale.

Le choix de l'alliage et la faible épaisseur du feuillard 3 confèrent à la courroie 1 une grande souplesse.

Les saillies 6 sont régulièrement espacées de manière à coïncider avec la disposition des dents de la poulie , non représentée, en se logeant entre deux dents consécutives.

Cet espacement régulier associé à la perméabilité magnétique de l'alliage métallique à haute limite élastique assure à la courroie une variation périodique de perméabilité magnétique.

En plaçant, par exemple un capteur magnétique à réluctance variable en regard de l'une des faces de la courroie 1, il est possible de mesurer la vitesse de déplacement de celle-ci par rapport au capteur et ainsi, de déterminer la vitesse de rotation d'un moteur de véhicule automobile.

Le feuillard 3 et les saillies 6 régulièrement espacées présentent une variation périodique de perméabilité magnétique devant une cellule d'un capteur qui ne mesure qu'une variation d'entrefer, cette variation générant une variation de la réluctance et donc du flux magnétique. L'enregistrement d'un signal périodique correspondant à cette variation temporelle de flux est traité par une électronique de commande appropriée qui en détermine la fréquence et, par la même, la vitesse de rotation de la courroie 1 et du moteur.

Les capteurs magnétiques utilisés sont du type capteur différentiel, à effet Hall ou à réluctance variable.

Avantageusement, la disposition régulière des saillies 6 sur le feuillard 3, peut présenter une absence d'au moins une saillie 6 formant ainsi un repère sur la courroie 1.

En employant le dispositif indiqué ci-dessus comportant un capteur magnétique à réluctance variable et que l'on dispose en regard de l'une des faces de la courroie 1 placée en position d'engrènement positif sur une poulie de distribution de vilebrequin, on peut déterminer la position de la courroie et donc la position géométrique d'une arbre de vilebrequin et plus particulièrement la position d'un piston au point mort haut ou au point mort bas.

Pour cela, il suffit de monter la courroie de distribution sur la poulie de distribution du vilebrequin en plaçant le repère en face du capteur, lorsque le piston est au point mort haut par exemple.

Cette caractéristique permet de supprimer la prise d'information qui est réalisée actuellement à partir de la poulie de vilebrequin ou d'une couronne de démarreur.

Comme représenté sur la Fig. 1, les saillies 6 sont formées par des crevés 10, chacun de ces crevés étant constitué par au moins un bord tombé et de préférence par deux bords tombés 11 disposés transversalement à l'âme 3 de la courroie.

Ces bords tombés 11 présentent une courbure, les deux courbures étant disposées symétriquement l'une par rapport à l'autre et se faisant face.

Les tangentes à l'origine de ces courbures sont sensiblement parallèles au feuillard 3.

Cette configuration des saillies est rendue possible grâce à la très bonne aptitude à la mise en forme de l'alliage constituant le feuillard 3.

Selon une variante, représentée à la Fig. 2, les saillies 6 sont des emboutis 14 qui présentent chacun une forme sensiblement parallélépipèdique, ou trapézoïdale, ou demi-cylindrique et de manière plus générale une forme curviligne. D'autres formes de réalisation des emboutis 14 pouvant être envisagées compte tenu de la remarquable aptitude de l'alliage à la mise en forme.

Selon une autre variante non représentée, les saillies 6 peuvent être formées par une succession de crevés 10 et/ou d'emboutis 14.

Pour réaliser une courroie 1 dont les éléments d'engrènement sont des crevés 10, on découpe le feuillard 3 préalablement mis en forme par laminage, à intervalles réguliers à l'aide d'un outil de découpe, l'outil étant par exemple placé au-dessus du feuillard 3 qui se déplace perpendiculairement à la direction verticale de déplacement dudit outil.

Dès lors que les crevés 10 sont réalisés, on enrobe le feuillard 3 muni de ses crevés d'un film 9 de polymère d'épaisseur uniforme.

Un tel produit est par exemple commercialisé par la firme "HEXCEL" et porte la référence "POO4LC8".

Des polymères comme les polyuréthanes, les téflons, les polyamides, polystyrènes et vernis souples conviennent pour former le film d'enrobage.

On réalise par exemple le film d'enrobage 9 par trempé dans une solution constituée d'un polymère liquide.

Plusieurs passes successives permettent d'obtenir l'épaisseur uniforme désirée comprise entre 0,1 et 0,5 mm.

Afin de polymériser le polymère, on procède à un séchage de celui-ci sur le feuillard 3, obtenant ainsi un film sec d'épaisseur uniforme qui reproduit fidèlement le contour du feuillard 3 et des crevés 10.

Le procédé de fabrication d'une courroie 1 dont les éléments d'engrènement sont des emboutis 14, ou des crevés 10 et des emboutis 14 est analogue à celui qui vient d'être décrit, à part l'opération d'emboutissage qui lui est propre.

Avantageusement, une telle courroie 1 possède une excellente tenue mécanique, un bon comportement en fatigue et une grande souplesse.

De plus, la faible épaisseur du film d'enrobage 9 permet d'alléger la courroie et de réaliser des économies de matière d'enrobage.

L'utilisation de ce type de courroie se justifie par une augmentation de la durée de vie par rapport à une courroie de distribution traditionnelle ainsi que par une transmission de puissance mécanique plus élevée.

Le film d'enrobage 9 peut également être formé par tout autre moyen.

Par exemple, on enrobe le feuillard 3 et les crevés 10 d'une gaine en matière thermorétractable, utilisée notamment en électronique pour raccorder des extrémités de fils électriques en assurant une parfaite isolation électrique.

Par chauffage, la matière s'adapte aux formes du feuillard 3 muni de ses crevés 10.

Comme représenté sur la Fig. 3, les saillies 6 sont, dans une première étape, formées par emboutissage à l'aide d'un poinçon puis, perforées sensiblement en leur milieu transversalement à la bande. Les bords tombés 15 ainsi formés prennent la forme de deux S symétriques l'un par rapport à l'autre, en vis-à-vis. Les extrémités libres des bords tombés 15 sont séparées par un espace 16 et se font face.

Dans un second mode de réalisation de l'invention représenté à la Fig. 4, les éléments d'engrènement sont des perforations 7 régulièrement espacées dans le feuillard 3.

D'une manière analogue au procédé décrit plus-haut, on perfore le feuillard 3 en alliage métallique à haute limite élastique, à intervalles réguliers, puis on l'enrobe d'un film 9 de polymère d'épaisseur uniforme par exemple par trempé.

Ce polymère peut être choisi parmi les polyuréthanes, les téflons, les polyamides, polystyrènes et vernis souples et, par exemple, on utilise le produit dont la référence est "POO4LC8" et qui est commercialisé par la firme "HEXCEL".

Un tel feuillard 3 enrobé s'adapte sur les dents d'une poulie afin de réaliser un engrènement, par exemple dans un mécanisme de distribution d'un moteur à combustion interne.

Les perforations 7 sont régulièrement espacées et peuvent comporter au moins une zone de discontinuité, permettant d'intégrer un moyen de mesure de la vitesse de rotation du moteur et de déterminer la position géométrique de la courroie, et de ce fait, de l'arbre du vilebrequin.

Une courroie selon l'invention dont les éléments d'engrènement sont des crevés 10, des emboutis 14 ou des perforations 7 possède un avantage supplémentaire par rapport à une courroie traditionnelle dont les moyens d'engrènement sont constitués par des dents en élastomère renforcé et durci et qui sont surmoulés par exemple sur un corps en élastomère dans lequel est noyée une âme résistante.

En effet, la courroie traditionnelle forme une masse importante de matière qui subit un échauffement interne intense lorsque ladite courroie est mise en service et soumise à des contraintes de flexion et de contreflexion élevées

Par contre, la forme évidée de la courroie selon la présente invention, du fait que le film d'enrobage 9 se conforme fidèlement au profil dessiné par le feuillard 3 et les éléments d'engrènement 6 ou 7, permet un refroidissement de celle-ci en position d'engrènement sur une poulie lorsqu'elle est le siège de contraintes thermomécaniques qui induisent un échauffement.

## Revendications

1. Courroie (1) comprenant une âme formée par un feuillard (3) en alliage métallique à haute limite élastique, muni, sur au moins une de ses faces d'une pluralité d'éléments d'engrènement (6, 7) obtenus par déformation ou par découpe locale du feuillard (3), caractérisée en ce que, de part et d'autre de chaque élément d'engrènement (6, 7), il subsiste deux bandes de feuillard non déformées et en ce que ledit feuillard (3) est enrobé d'un film (9) de polymère d'épaisseur uniforme.

2. Courroie selon la revendication 1, caractérisée en ce que les éléments d'engrènement sont des saillies (6).

3. Courroie selon la revendication 1, caractérisé en ce que les éléments d'engrènement sont des perforations (7).

4. Courroie selon les revendications 1 et 2, caractérisée en ce que les saillies (6) sont des crevés (10), chacun desdits crevés étant formé par au moins un bord tombé (11) disposé transversalement à l'âme (3).

5. Courroie selon la revendication 4, caractérisée en ce que le bord tombé (11) présente une courbure.

6. Courroie selon les revendications 1 et 2, caractérisée en ce que les saillies (6) sont des emboutis (14).

7. Courroie selon la revendication 6, caractérisée en ce que les emboutis (14) présentent une forme sensiblement parallélépipèdique.

8. Courroie selon la revendication 7, caractérisé en ce que les emboutis (14) présentent une perforation (16) sensiblement en leur milieu, disposée transversalement à l'âme (3).

9. Courroie selon la revendication 6, caractérisée en ce que les emboutis (14) présentent une forme demi-cylindrique.

10. Courroie selon l'une quelconque des revendications 1 à 9, caractérisée en ce que les éléments d'engrènement (6, 7) présentent au moins une zone de discontinuité.

11. Courroie selon l'une quelconque des revendications 1 à 10, caractérisée en ce que l'épaisseur du film (9) polymère est comprise entre 0,1 et 0,5mm.

12. Courroie selon la revendication 11, caractérisée en ce que le polymère est formé d'un vernis.

13. Courroie selon l'une quelconque des revendications 1 à 12, caractérisée en ce que l'alliage métallique à haute limite élastique possède la composition suivante :
- Cobalt entre 7 et 10%
- Nickel entre 16 et 20%
- Molybdène entre 3,5 et 6,5%
- Titane entre 0,2 et 1%
le reste étant du fer et des impuretés résultant de l'élaboration.

14. Courroie selon la revendication 12, caractérisée en ce que la composition pondérale de l'alliage métallique est, de préférence, la suivante :
- Cobalt environ 9%
- Nickel environ 18%
- Molybdène environ 5%
- Titane environ 0,5%
le reste étant du fer et des impuretés résultant de l'élaboration.

15. Procédé de fabrication d'une courroie (1) selon l'une quelconque des revendications 1 à 14, caractérisée en ce que :
- on découpe, on emboutit ou on perfore un feuillard (3) en alliage métallique à haute limite élastique pour former des éléments d'engrènement (6, 7) de la courroie, en laissant subsister de part et d'autre des éléments d'engrènement (6, 7) par rapport à l'axe longitudinal du feuillard, des bandes de feuillard non déformées,
- on solidarise les deux extrémités du feuillard (3) de façon à former un anneau continu, par exemple par soudage et notamment par soudage au laser,
- et on enrobe le feuillard (3) et les éléments d'engrènement (6, 7) d'un film (9) de polymère d'épaisseur uniforme.

16. Procédé selon la revendication 15, caractérisé en ce que le film d'enrobage (9) du feuillard (3) et des éléments d'engrènement (6, 7) est formé par au moins un trempé dans une solution constituée d'un polymère liquide.

17. Procédé selon les revendications 15 et 16, caractérisé en ce que l'on sèche le film (9) après l'opération de trempé.

18. Utilisation d'une courroie selon l'une des revendications 1 à 14 dans un mécanisme de distribution d'un moteur.

19. Utilisation d'une courroie selon la revendication 18 pour mesurer la vitesse de rotation du moteur, ladite mesure étant faite en plaçant en regard de l'une des faces de la courroie un capteur magnétique, par exemple un capteur magnétique à réluctance variable.

## Claims

1. Belt (1) Comprising a core formed by a sheet (3) of metal alloy having a high elastic limit, provided on at least one of its surfaces with a plurality of engaging elements (6, 7) obtained by deformation or local cutting of the sheet (3), characterised in that, on each side of each engaging element (6, 7), there are two strips of undeformed sheet and in that said sheet (3) is coated with a polymer film (9) of uniform thickness.

2. Belt according to claim 1, characterised in that the engaging elements are projections (6).

3. Belt according to claim 1, characterised in that the engaging elements are perforations (7).

4. Belt according to claims 1 and 2, characterised in that the projections (6) are slashes (10), each of said slashes being formed by at least one dropped edge (11) arranged transversely of the core (3).

5. Belt according to claim 4, characterised in that the dropped edge (11) has a curvature.

6. Belt according to claims 1 and 2, characterised in that the projections (6) are stamped structures (14).

7. Belt according to claim 6, characterised in that the stamped structures (14) are substantially parallelepipedonal in shape.

8. Belt according to claim 7, characterised in that the stamped structures (14) have a perforation (16) substantially in their centre, arranged transversely of the core (3).

9. Belt according to claim 6, characterised in that the stamped structures (14) are semi-cylindrical in shape.

10. Belt according to any one of claims 1 to 9, characterised in that the engaging elements (6, 7) have at least one zone of discontinuity.

11. Belt according to any one of claims 1 to 10, characterised in that the thickness of the polymer film (9) is between 0.1 and 0.5 mm.

12. Belt according to claim 11, characterised in that the polymer is formed by a varnish.

13. Belt according to any one of claims 1 to 12, characterised in that the metal alloy with a high elastic limit has the following composition:
cobalt: between 7 and 10 %
nickel: between 16 and 20 %
molybdenum: between 3.5 and 6.5 %
titanium: between 0.2 and 1 %
the remainder being iron and impurities resulting from the processing.

14. Belt according to claim 12, characterised in that the composition by weight of the metal alloy is preferably as follows:
cobalt: about 9 %
nickel: about 18 %
molybdenum: about 5%
titanium: about 0.5 %
the remainder being iron and impurities resulting from the processing.

15. Process for manufacturing a belt (1) according to any one of claims 1 to 14, characterised in that:
a sheet (3) of metal alloy having a high elastic limit is cut, stamped or perforated in order to form the engaging elements (6, 7) of the belt, whilst leaving strips of undeformed sheet on each side of the engaging elements (6, 7) relative to the longitudinal axis of the sheet,
the two ends of the sheet (3) are joined together so as to form a continuous ring, for example by welding and especially by laser welding,
and the sheet (3) and the engaging elements (6, 7) are coated with a polymer film (9) of uniform thickness.

16. Process according to claim 15, characterised in that the coating film (9) for the sheet (3) and the engaging elements (6, 7) is formed by at least one immersion in a solution consisting of a liquid polymer.

17. Process according to claims 15 and 16, characterised in that the film (9) is dried after the immersion process.

18. Use of a belt according to one of claims 1 to 14 in the distribution mechanism of an engine.

19. Use of a belt according to claim 18 for measuring the speed of rotation of the engine, this measurement being effected by placing a magnetic sensor, for example a variable-resistance magnetic sensor, opposite one side of the belt.

## Patentansprüche

1. Riemen (1) mit einem Kern aus einem Band (3) aus einer metallischen Legierung mit hoher Elastizitätsgrenze, der auf wenigstens einer seiner Oberflächen mit einer Anzahl von Eingriffselementen (6, 7) versehen ist, die erhalten werden durch Verformung oder örtliches Einschneiden des Bandes (3), dadurch gekennzeichnet, daß beiderseits des Eingriffselements (6, 7) zwei Streifen des Bandes (3) verbleiben, die nicht verformt sind, und daß das Band (3) durch einen Film aus einem Polymer mit gleichförmiger Stärke eingeschlossen ist.

2. Riemen nach Anspruch 1, dadurch gekennzeichnet daß die Eingriffselemente Vorsprünge (6) sind.

3. Riemen nach Anspruch 1, dadurch gekennzeichnet, daß die Eingriffselemente Perforationen (7) sind.

4. Riemen nach Anspruch 1 und 2, dadurch gekennzeichnet, daß die Vorsprünge (6) Einschnitte (10) sind und daß jeder der Einschnitte gebildet ist durch wenigstens einen heruntergezogenen Rand (11), der quer zum Kern (3) angeordnet ist.

5. Riemen nach Anspruch 4, dadurch gekennzeichnet, daß der heruntergezogene Rand (11) einen Bogen bildet.

6. Riemen nach Anspruch 1 und 2, dadurch gekennzeichnet, daß die Vorsprünge Noppen (14) sind.

7. Riemen nach Anspruch 6, dadurch gekennzeichnet, daß die Noppen (14) im wesentlichen quaderförmig sind.

8. Riemen nach Anspruch 7, dadurch gekennzeichnet, daß die Vorsprünge (14) eine Perforation (16) im wesentlichen in ihrer Mitte aufweisen, die sich quer zum Kern (3) erstreckt.

9. Riemen nach Anspruch 6, dadurch gekennzeichnet, daß die Noppen (14) eine halbzylindrische Form aufweisen.

10. Riemen nach einem der Ansprüche 1 bis 9. dadurch gekennzeichnet, daß die Eingriffselemente (6, 7) wenigstens eine diskontinuierliche Zone bilden.

11. Riemen nach einem der Ansprüche 1 bis 10, dadurch gekennzeichnet, daß die Dicke des Films (9) aus Polymer zwischen 0,1 und 0,5 mm liegt.

12. Riemen nach Anspruch 11, dadurch gekennzeichnet, daß das Polymer durch einen Lack gebildet ist.

13. Riemen nach einem der Ansprüche 1 bis 12, dadurch gekennzeichnet, daß die metallische Legierung mit hoher Elastizitätsgrenze die folgende Zusammensetzung aufweist:
Kobalt zwischen 7 und 10%
Nickel zwischen 16 und 20%
Molybdän zwischen 3, 5 und 6,5%
Titan zwischen 0,2 und 1%
Rest Eisen und herstellungsbedingte Verunreinigungen.

14. Riemen nach Anspruch 12, dadurch gekennzeichnet, daß die gewichtsmäßige Zusammensetzung der metallischen Legierung vorzugsweise die folgende ist:
Kobalt ca. 9%
Nickel ca. 18%
Molybdän ca. 5%
Titan ca. 0,5%
Rest Eisen und herstellungsbedingte Verunreinigungen.

15. Verfahren zur Herstellung eines Riemens (1) gemäß einem der Ansprüche 1 bis 14, dadurch gekennzeichnet,
- daß ein Band (3) aus einer metallischen Legierung mit hoher Elastizitätsgrenze eingeschnitten, ausgebaucht oder perforiert wird zur Bildung von Eingriffselementen (6, 7) des Riemens, wobei auf beiden Seiten der Eingriffselemente (6, 7) in bezug auf die Längsachse des Bandes Streifen des Bandes ohne Verformung bleiben,
- daß die beiden Enden des Bandes (3) zur Bildung eines endlosen Ringes verbunden werden, beispielsweise durch Schweißen, insbesondere Laser-Schweißen,
- daß das Band (3) und die Eingriffselemente (6, 7) durch einen Film (9) aus einem Polymer mit gleichförmiger Stärke umgeben werden.

16. Verfahren nach Anspruch 15, dadurch gekennzeichnet, daß der das Band (3) und die Eingriffselemente (6, 7) einhüllende Film (9) gebildet wird wenigstens durch Eintauchen in eine Lösung aus einem flüssigen Polymer.

17. Verfahren nach Anspruch 15 und 16, dadurch gekennzeichnet, daß der Film (9) nach der Tauchbehandlung getrocknet wird.

18. Verwendung eines Riemens gemäß einem der Ansprüche 1 bis 14 in einem Verteilermechanismus eines Motors.

19. Verwendung eines Riemens gemäß Anspruch 18 zum Messen der Drehzahl eines Motors, welche Messung durchgeführt wird, indem auf einer der Flächen des Riemens ein magnetischer Sensor, beispielsweise ein magnetischer Sensor mit veränderlicher Reluktanz angebracht wird.
